# EUROPEAN PATENT APPLICATION

(11) **EP 4 231 397 A1**
(43) Date of publication of application: **23.08.2023**
(21) Application number: 21879949.2
(22) Date of filing: 06.10.2021
(51) Int. Cl.: H01M 10/04, H01M 10/48, H01M 50/10

(54) **SENSOR UNIT AND BATTERY PRODUCTION EQUIPMENT INSPECTION METHOD**

(30) Priority: 14.10.2020 JP 2020173034
(71) Applicant: SANYO Electric Co., Ltd., Daito-shi Osaka 574-8534 (JP)
(72) Inventor: OKINA, Yasuhiro, Osaka-shi, Osaka 540-6207 (JP); USHIZAWA, Shunya, Osaka-shi, Osaka 540-6207 (JP); MATSUSHITA, Yoshihiro, Osaka-shi, Osaka 540-6207 (JP); OUE ,Motohiro, Osaka-shi, Osaka 540-6207 (JP)
(74) Representative: Novagraaf International SA
(86) International application number: PCT/JP2021/036982
(87) International publication number: WO 2022/080209

(57) **Abstract**

A sensor unit in one example embodiment of the present invention is a sensor unit that is loaded into battery production equipment and is provided with a bottomed cylindrical case which is processes similarly to a battery outer can via the battery production equipment, and a sensor which is attached to the case and detects force acting on the case from the battery production equipment. The sensor unit is provided with, for example, a first component to which the sensor is attached and which is accommodated inside the case, and a second component which is disposed so as to engage the outside of the first component. The first component is configured to be removable from an opening in the case by being separated from the second component.

## Description

### TECHNICAL FIELD

The present disclosure relates to a sensor unit introduced to a battery manufacturing facility, and to a method of inspecting a battery manufacturing facility using the sensor unit.

### BACKGROUND

Batteries such as lithium ion batteries have a structure, for example, in which an electrode assembly and an electrolyte are housed in an outer housing can having a tubular shape with a bottom, and an opening of the outer housing can is sealed by a sealing assembly. Batteries having such a structure are manufactured in general through a large number of manufacturing steps. In the manufacturing steps of the battery, after the electrode assembly is housed in the outer housing can, for example, groove-producing machining, lead welding, crimping machining, and the like are performed. For this purpose, the outer housing can housing the electrode assembly is transported to a plurality of apparatuses which are a part of a manufacturing facility, and a predetermined machining is performed in each apparatus.

Because a state of the battery manufacturing facility affects yield, quality, productivity, and the like of the batteries, it is necessary to maintain a superior state through periodic inspections. However, because the battery manufacturing facility is formed from a large number of machining apparatuses, transporting apparatuses, and the like, identifying an abnormal location is not easy, and work load of the inspection is large.

As a technique related to the inspection of the manufacturing facility, Patent Literature 1 discloses an apparatus which inspects a facility using an article transporting tool. In the apparatus of Patent Literature 1, a detector which detects an operation state defined in correspondence to an inspection item such as an article transport line, a wireless transmitter which transmits an information signal detected by the detector, and a power supply are equipped on the article transporting tool, and the state of the facility is inspected based on information acquired by the detector.

### CITATION LIST

### PATENT LITERATURE

PATENT LITERATURE 1: JP H9-020419 A

### SUMMARY

### TECHNICAL PROBLEM

With the apparatus of Patent Literature 1, reduction of inspection load may be expected to a certain extent, but there still remains room of improvement in accurately identifying an abnormal location which may affect the yield, quality, and the like of the products. An advantage of the present disclosure lies in provision of a method which enables accurately and quickly identifying the abnormal location of the battery manufacturing facility.

### SOLUTION TO PROBLEM

According to one aspect of the present disclosure, there is provided a sensor unit which is introduced to a battery manufacturing facility, the sensor unit including: a casing having a tubular shape with a bottom, and that is processed similarly to an outer housing can of a battery in the battery manufacturing facility; and a sensor that is mounted on the casing and that detects a force which acts from the battery manufacturing facility on the casing.

According to another aspect of the present disclosure, there is provided a method of inspecting a battery manufacturing facility, including; introducing the sensor unit to the battery manufacturing facility; and acquiring information detected by the sensor of the sensor unit, and analyzing a state of the battery manufacturing facility.

### ADVANTAGEOUS EFFECTS

According to the sensor unit of the present disclosure, it becomes possible to visualize a force exerted from the battery manufacturing facility to the outer housing can, and to accurately and quickly identify the abnormal location of the facility. Because of this, for example, the work load of the facility inspection can be reduced, and the yield, the quality, the productivity, and the like of the batteries can be improved.

### BRIEF DESCRIPTION OF DRAWINGS

FIG. 1 is a perspective diagram of a sensor unit according to an embodiment of the present disclosure.
FIG. 2 is a plan view of a sensor unit according to an embodiment of the present disclosure.
FIG. 3 is an exploded perspective diagram of a sensor unit according to an embodiment of the present disclosure.
FIG. 4 is a perspective diagram of a support assembly, a first substrate, and a second substrate forming a first component.
FIG. 5 is a perspective diagram of a first component viewed from a bottom surface section side.
FIG. 6 is a diagram showing taking-out of a first component from a casing on which a groove section is formed.
FIG. 7 is a diagram showing taking-out of a first component from a casing on which a groove section is formed.
FIG. 8 is a diagram for explaining a method of inspecting a battery manufacturing facility using a sensor unit according to an embodiment of the present disclosure.

### DESCRIPTION OF EMBODIMENTS

A sensor unit and a method of inspecting a battery manufacturing facility according to an embodiment of the present disclosure will now be described in detail with reference to drawings. Selective combination of a plurality of embodiments and alternative configurations described below is contemplated from the beginning.

In the following, a sensor unit 10 having a casing 11 which is identical to an outer housing can having a circular tubular shape with a bottom used in a circular tubular battery will be exemplified as a sensor unit according to an embodiment of the present disclosure, but the shape of the sensor unit may be suitably changed according to the battery manufacturing facility. For example, the shape of the casing of the sensor unit introduced to a manufacturing facility of prismatic batteries may be a prismatic shape with a bottom similar to the outer housing can of the prismatic battery. That is, it is sufficient that the shape of the casing of the sensor unit is a tubular shape with a bottom.

For a casing 11 in the present embodiment, a same casing as the outer housing can of the battery manufactured by the battery manufacturing facility is used, but alternatively, the casing 11 may be a dedicated product for the sensor unit, different from the outer housing can of the battery. It is sufficient that the casing of the sensor unit is substantially the same as the outer housing can of the battery, and the shape or the like may be slightly different within a range which does not adversely affect the advantage of the present disclosure.

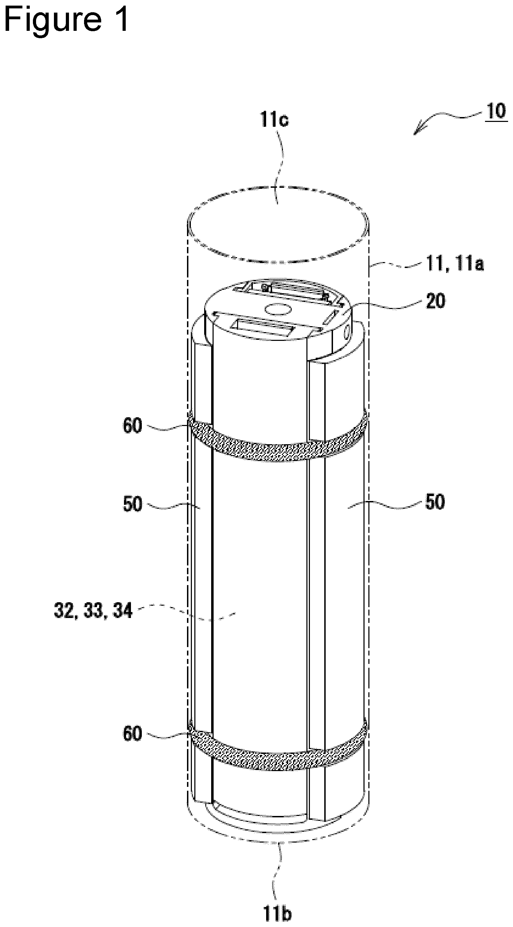

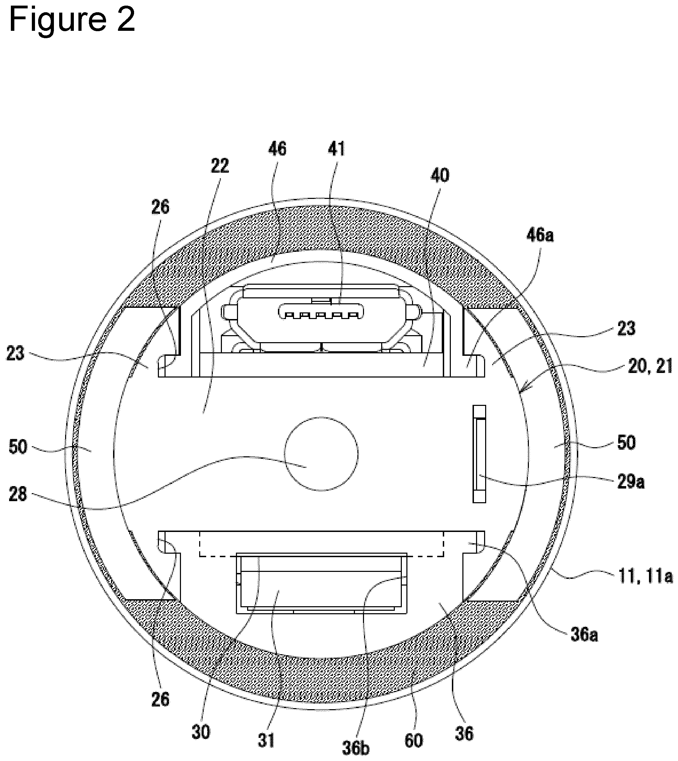

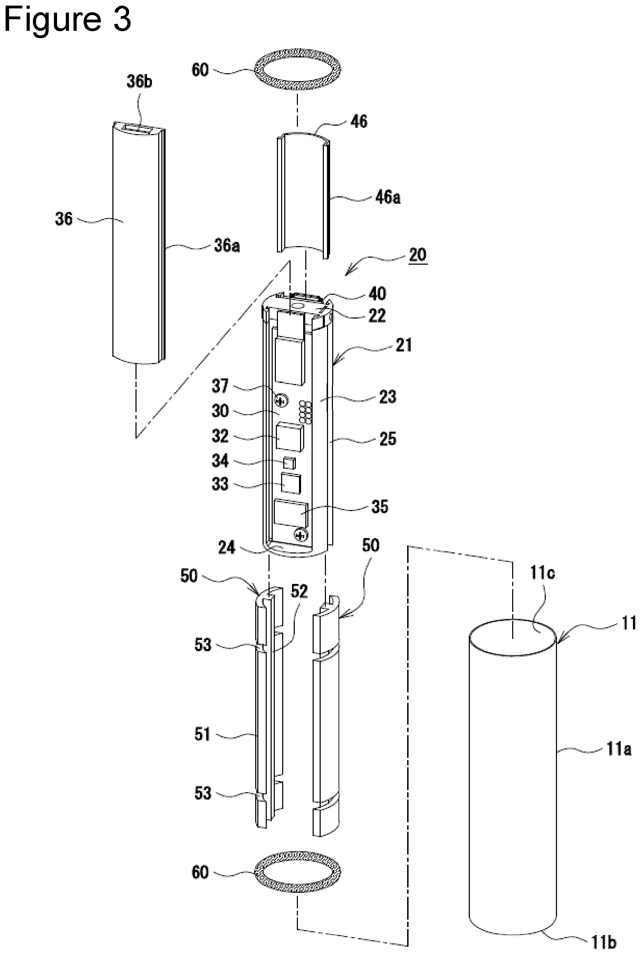

FIGs. 1 to 3 are respectively a perspective diagram, a plan view, and an exploded perspective diagram of the sensor unit 10. In FIG. 1, the casing 11 is shown with a two-dots-and-a-chain line. As shown in FIGs. 1 to 3, the sensor unit 10 has the casing 11 having a circular tubular shape with a bottom, and a sensor mounted on the casing 11. As will be described in detail later, the sensor unit 10 is introduced to the battery manufacturing facility in order to acquire information detected by the sensor (hereinafter, also referred to as "detected information"), and to inspect a state of the battery manufacturing facility.

The casing 11 is a metal casing having a side surface section 11a having a circular tubular shape, and a bottom surface section 11b having a perfect circular shape in the bottom view. The casing 11 has a circular tubular shape with a bottom, in which one end in an axial direction of the side surface section 11a is blocked by the bottom surface section 11b, and an opening 11c is formed at the other end in the axial direction of the side surface section 11a. In the following, for the purpose of convenience of description, a direction along an axial direction perpendicular to the bottom surface section 11b will be referred to as an "up-and-down direction", with the side of the opening 11c as an "upper side" and the side of the bottom surface section 11b as a "bottom side".

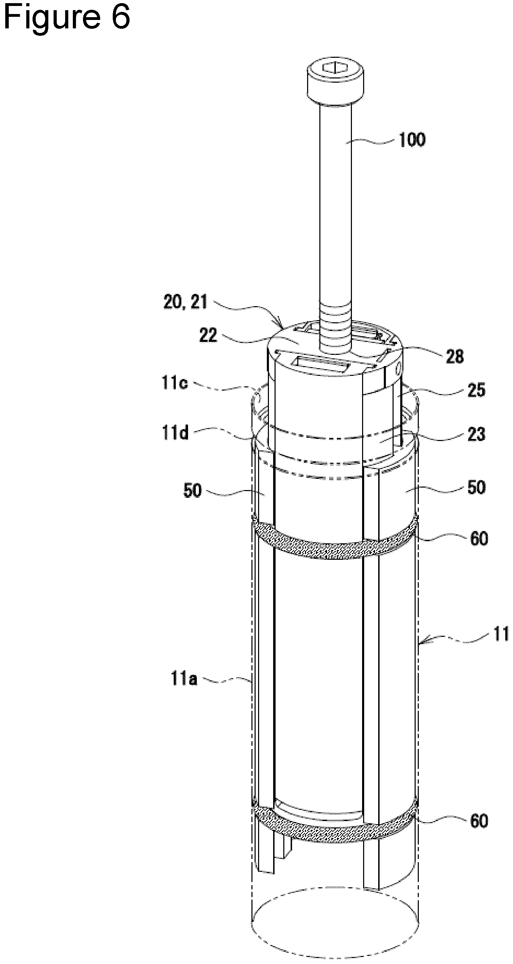

The sensor unit 10 is transported to the machining apparatus or the like forming the battery manufacturing facility, similar to the product-in-process of the battery, and the casing 11 is processed in the battery manufacturing facility in a manner similar to the outer housing can of the battery. In the present embodiment, similar to the outer housing can of the battery, a groove section 11d (refer to FIG. 6 to be described later) is formed on the casing 11. As described above, for the casing 11, a structure identical to the outer housing can of the battery is used. With the use of the same structure as the outer housing can of the battery for the casing 11, it becomes easier to apply processes similar to the outer housing can to the casing 11. Further, it becomes possible to more accurately detect the force experienced by the sensor unit 10 from the battery manufacturing facility, and to more easily identify an abnormal location of the facility.

The sensor unit 10 includes, as sensors mounted on the casing 11, an acceleration sensor 32, a gyro sensor 33, and an environment sensor 34. The acceleration sensor 32 and the gyro sensor 33 detect a force acting from the battery manufacturing facility on the casing 11. The environment sensor 34 detects at least one of temperature, humidity, or atmospheric pressure in the battery manufacturing facility. In the sensor unit 10, these sensors are housed inside the casing 11. In this configuration, the casing 11 can be easily processed similarly to the outer housing can of the battery, and dropping, damaging, or the like of the sensor can be prevented.

By introducing the sensor unit 10 to the battery manufacturing facility, the sensors which are equipped detect various information of the manufacturing facility. In an inspection method of the present embodiment, the state of the battery manufacturing facility is analyzed from the detected information of the sensor, and the abnormal location of the facility is identified. When there is an abnormal location in the manufacturing facility, for example, the sensor unit 10 detects at the abnormal location a force different from that in the case of no abnormality acting on the casing 11. With the sensor unit 10, the force exerted from the battery manufacturing facility to the outer housing can of the battery can be visualized. Further, by comparing the detected information of the sensor with the detected information in the case of no abnormality in the manufacturing facility, it becomes possible to accurately identify the abnormal location of the facility.

The acceleration sensor 32 is a device for measuring an acceleration which is an amount of change of velocity per unit time of the sensor unit 10 (casing 11). The acceleration sensor 32 generates, for example, a detection signal according to a magnitude of the acceleration in a predetermined one-axis direction or three-axis direction. When an impact is exerted to the casing 11 during transport or the like, the acceleration sensor 32 detects the impact as the acceleration. When there is an abnormal location in the battery manufacturing facility, an impact different from that in the normal case without the abnormality is exerted on the casing 11. Because the abnormality of the acceleration different from the normal case can be judged based on the detected information of the acceleration sensor 32, the abnormal location of the facility can be accurately identified.

The gyro sensor 33 is a device for measuring a velocity of rotational motion of the sensor unit 10 around a reference axis, and is also generally called an angular velocity sensor. The gyro sensor 33 measures, for example, an angular velocity which is a rotational angle per unit time, and generates a detection signal according to the angular velocity. In the battery manufacturing facility, for example, the casing 11 is rotated when the casing 11 is machined. During such a process, the gyro sensor 33 measures the angular velocity of the sensor unit 10. When the gyro sensor 33 detects an angular velocity different from the normal case without the abnormality in the facility, the location at which the angular velocity is detected can be identified as the abnormal location.

The environment sensor 34 includes, for example, at least one of a thermometer, a hygrometer, or a barometer. In the battery manufacturing facility, for example, heat generation may be expected due to failure or the like. Because it may be considered that the environment in the battery manufacturing facility such as the temperature affects the quality of the battery, desirably, the environment sensor 34 is equipped in the sensor unit 10, to enable identification of environmental abnormality in the facility. The thermometer, the hygrometer, and the barometer may be integrated, or may be separately provided.

The sensors mounted on the casing 11 are not limited to the acceleration sensor 32, the gyro sensor 33, and the environment sensor 34, and any sensor which can detect the abnormality of the battery manufacturing facility may be employed. Other examples of the sensor include a vacuum pressure sensor and an image sensor.

The sensor unit 10 has a first component 20 on which the sensor is mounted, and a second component 50 placed at an outer side of the first component 20 and engaging the first component 20. The first component 20 is housed inside the casing 11 along with the second component 50. Two second components 50 are provided on both sides of the first component 20 in a manner to sandwich the first component 20. In the following, a structure in which the second component 50 is assembled to the first component 20 and the first component 20 and the second component 50 are thus integrated will be called a "core component". As will be described later in detail, the first component 20 is configured such that the first component 20 can be separated from the second component 50, and can be taken out from the opening 11c of the casing 11.

The sensor unit 10 further includes an elastic member 60 having an annular shape, which is fitted onto the second component 50 and which is in contact with an inner circumferential surface of the casing 11. The elastic member 60 is, for example, a ring-shaped member made of rubber. At least a part of the elastic member 60 is positioned at an outer side in a radial direction than the second component 50 in the state in which the elastic member 60 is fitted onto the second component 50. The elastic member 60 has functions to tie together the first component 20 and the second component 50, and to maintain the integrated state of the first component 20 and the second component 50 (core component). The elastic member 60 also contacts the inner circumferential surface of the casing 11, so as to suppress a positional deviation, rotation, or the like of the core component during machining and transport of the sensor unit 10.

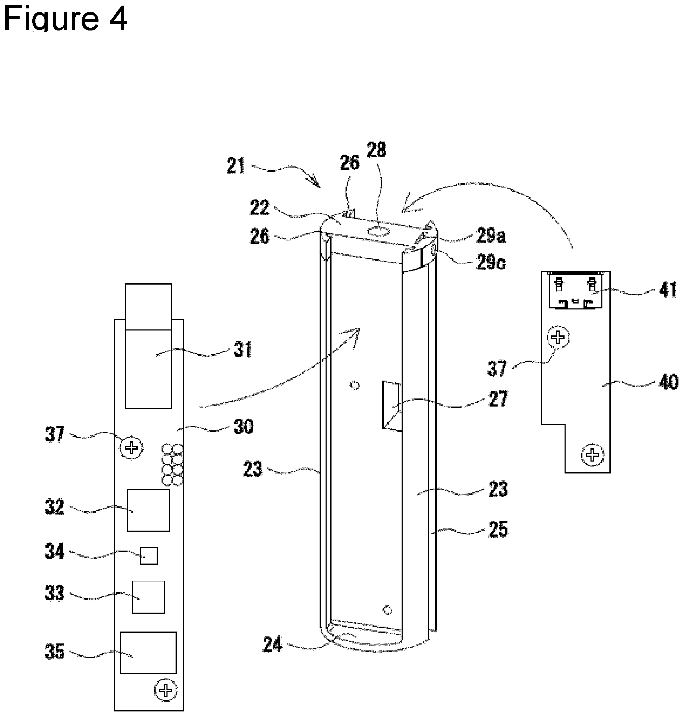

The first component 20, the second component 50, and the elastic member 60 of the sensor unit 10 will now be described in detail with reference to FIGs. 1 to 5. FIG. 4 is a perspective diagram of a support assembly 21, a first substrate 30, and a second substrate 40 of the first component 20.

### [First Component 20]

As shown in FIGs. 1 to 4, the first component 20 has the support assembly 21, the first substrate 30 on which the sensors are provided, and the second substrate 40 on which a connection terminal 41 is provided. In the present embodiment, the first substrate 30 and the second substrate 40 are fixed on the support assembly 21. On the first substrate 30, the acceleration sensor 32, the gyro sensor 33, and the environment sensor 34 are mounted as sensors. In addition, on the first substrate 30, a microcomputer module 31 which functions as a wireless communication module and a microcomputer is mounted. The first component 20 further has a first cover 36 which covers the first substrate 30, and a second cover 46 which covers the second substrate 40.

The support assembly 21 is a member of a size which enables housing of the support assembly 21 inside the casing 11 and which also enables supporting of the first substrate 30 and the second substrate 40. The support assembly 21 is formed in a pillar shape elongated in the up-and-down direction. The first substrate 30 and the second substrate 40 are fixed to the support assembly 21, for example, using a screw 37. To the support assembly 21, two second components 40, the first cover 36, and the second cover 46 are attached. The first component 20 has a circular pillar shape as a whole in a state in which the two covers are attached, and has a smaller diameter than an inner size of the groove section 11d of the casing 11. In this configuration, it is possible to take the first component 20 out of the casing 11 and retrieve the first component 20 after the groove section 11d is formed.

The support assembly 21 is, for example, a resin member having a base 22, a side surface section 23, and a bottom surface section 24. The bottom surface section 24 is formed in an approximate circular shape in the bottom view. The base 22 vertically extends on the bottom surface section 24, and is formed in a plate shape along a radial direction of the bottom surface section 24. On the base 22, two approximately flat surfaces elongated in the up-and-down direction exist. In the following, these two surfaces will be referred respectively as a "first surface" and a "second surface". In the first component 20, the first substrate 30 is screwed on the first surface, and the second substrate 40 is screwed on the second surface. The first surface and the second surface are parallel with each other, and the first substrate 30 and the second substrate 40 are placed parallel with each other with the base 22 therebetween.

The side surface section 23 vertically extends on a part of a peripheral portion of the bottom surface section 24, and has a shape elongated in the up-and-down direction and gradually curved. The side surface section 23 curves along an inner circumferential surface of the casing 11. The side surface sections 23 are formed on respective ends of the base 22, arranged along the radial direction of the casing 11. The side surface section 23 is a section where the second component 50, which is curved similarly to the side surface section 23, is attached. Further, the first cover 36 and the second cover 46 are attached to the support assembly 21 by being engaged with the side surface section 23. The two covers are formed from, for example, a transparent resin, and are curved similarly to the side surface section 23.

On an outer surface of the side surface section 23, a guide groove 25, into which a protrusion 52 of the second component 50 is inserted, is formed. The guide groove 25 is formed across the side surface section 23 from a lower end toward a region near an upper end along the up-and-down direction. While the upper end of the guide groove 25 is closed, the lower end is opened. Because of this configuration, in a state in which the protrusion 52 of the second component 50 is inserted into the guide groove 25 and the first component 20 and the second component 50 are thus engaged, the first component 20 can be slid upward and separated from the second component 50, as shown in FIG. 6 to be described later.

On an inner surface of the side surface section 23, a guide groove 26 into which protrusions 36a and 46a respectively of the first cover 36 and the second cover 46 are inserted is formed. The guide groove 26 is formed at a total of four locations corresponding to respective ends of the first surface and the second surface of the base 22, from the upper end of the side surface section 23 along the up-and-down direction. In the first component 20, the side surface section 23, the first cover 36, the side surface section 23, and the second cover 46 are placed in this order in a circumferential direction, and the first component 20 thus has the circular pillar shape as a whole, as described above. Outer surfaces of the two side surface sections 23 and outer surfaces of the two covers have substantially the same radius of curvature, and these members are flush with each other.

A through hole 27 (refer to FIG. 4) which penetrates through the base 22 in a thickness direction and which opens at the first surface and the second surface is formed on the base 22. Through the through hole 27, for example, a wiring for electrically connecting the first substrate 30 and the second substrate 40 is passed. By electrically connecting the first substrate 30 and the second substrate 40 through the through hole 27, it become possible, for example, to take out the detected information of the sensor mounted on the first substrate 30 to the outside through a cable connected to the connection terminal 41 of the second component 50. In addition, a predetermined signal may be transmitted from the outside to the microcomputer module 31 or the like via the cable.

Further, in the base 22, a through hole 28 penetrating through the base 22 in the up-and-down direction is formed. The through hole 28 is a hole into which a bolt 100 (refer to FIG. 6 to be described later), which is used when the first component 20 is taken out from the casing 11, is inserted, and a thread groove for securing the bolt 100 is formed at an upper part of the through hole 28. The through hole 28 is formed at a position which does not intersect the through hole 28, and is desirably formed at a center portion in the radial direction of the first component 20. In other words, the through hole 27 is formed avoiding the center portion in the radial direction of the first component 20. When the through hole 28 only functions as an insertion hole of the bolt 100, the through hole 28 may open at a top surface of the base 22, and may be formed only at the upper part of the base 22.

The through hole 28 is formed straight along the up-and-down direction, and from the top surface of the base 22 to the bottom surface section 24. In a winding type electrode assembly forming a circular tubular battery, a hole similar to the through hole 28 is formed at the center portion, and, in the circular tubular battery, a welding jig is inserted into this hole and a negative electrode lead is welded to an inner surface of the bottom of the outer housing can. By forming the through hole 28 penetrating the first component 20 through in the up-and-down direction, it becomes possible to perform welding similar to the welding of the negative electrode lead and the outer housing can, using a metal piece (not shown) imitating the negative electrode lead in the sensor unit 10. The through hole 28 has a diameter which enables insertion of the welding jig.

On the top surface of the base 22, a lead fixation section 29a is formed. The lead fixation section 29a is a section where a metal piece (not shown), imitating a positive electrode lead extending from the electrode assembly of the battery, is inserted. The lead fixation section 29a is formed, for example, in an elongated slit shape at one end of the top surface of the base 22. A thread hole 29c (refer to FIG. 4) in communication with the lead fixation section 29a may be formed on the side surface section 23. In this case, the metal piece inserted into the lead fixation section 29a can be fixed by inserting a screw from the thread hole 29c. With this configuration, it becomes possible to perform welding similar to the welding of the positive electrode lead and a sealing element, also in the sensor unit 10.

As described above, the microcomputer module 31, the acceleration sensor 32, the gyro sensor 33, and the environment sensor 34 are mounted on the first substrate 30. Further, a memory 35 is mounted on the first substrate 30. For the memory 35, a nonvolatile memory such as a flash memory is employed. The detected signal generated by the sensor is transmitted, for example, to the microcomputer module 31, a predetermined process is applied at the microcomputer module 31, and the processed signal is stored in the memory 35. In addition, the detected information of the sensor stored in the memory 35 is read out to the outside via the microcomputer module 31.

The microcomputer module 31 has, for example, one or more processors which execute a predetermined calculation process, a memory which stores a control program or the like, an input/output port, and the like. Each of the one or more processors is formed from, for example, a CPU, and reads and executes the control program installed in the memory. The memory in general includes a nonvolatile memory such as a ROM, an HDD, and an SSD, and a volatile memory such as a RAM. The microcomputer module 31 sets a state in which measurement by the sensor is possible, for example, when receiving a startup signal from an external apparatus.

The microcomputer module 31 has a wireless communication module built therein. In this configuration, with the wireless communication function of the microcomputer module 31, the detected information of the sensor stored in the memory 35 can be transmitted to a predetermined external apparatus. Because the casing 11 is a metal casing, when the wireless communication module is built in the microcomputer 31, the microcomputer module 31 is desirably placed at an upper end portion of the first substrate 30 near the opening 11c, in consideration of communication capability. No particular limitation is imposed on the communication scheme of the wireless communication module, and alternatively, the wireless communication module may be provided separately from the microcomputer.

In the present embodiment, an opening 36b is formed on an upper surface of the first cover 36 which covers the first substrate 30. In addition, a part of the microcomputer module 31 is placed in a state of being extended from an upper end of the first substrate 30 toward the upper side, and inserted into the opening 36b. In this configuration, the microcomputer module 31 can be placed nearer to the opening 11c of the casing 11. On the other hand, because the microcomputer module 31 does not protrude from the opening 36b to the outer side of the first cover 36, the microcomputer module 31 is protected by the first cover 36.

As described above, the connection terminal 41 is provided on the second substrate 40. The connection terminal 41 is a section into which a predetermined cable is inserted, and is placed at an upper end part of the second substrate 40. While the second substrate 40 is covered with the second cover 46, an upper end of the second cover 46 is open, and the connection terminal 41 is exposed when the first component 20 is viewed from above. Because of this, the cable can be connected to the connection terminal 41 in a state with the second cover 46. The connection terminal 41 may be provided on the first substrate 30, but because both the wireless communication module and the connection terminal 41 are desirably placed at an upper end part of the substrate, these members are provided on separate substrates.

The cable inserted into the connection terminal 41 is connected, for example, to a computer for analyzing the detected information of the sensor. As will be described in detail below, in the computer for the analysis, presence or absence of abnormality of the battery manufacturing facility is judged based on the detected information of the sensor, and, when there is an abnormality, an abnormal location is identified. No particular limitation is imposed on the type of the cable to be connected to the connection terminal 41, and examples of the cable include a USB cable. The structure of the connection terminal 41 may be suitably modified according to the cable to be used.

Alternatively, a light source for displaying a state of charge of a battery 45 to be described later, a communication state with the computer for analysis, and the like may be provided on the second substrate 40. For the light source, for example, an LED is used which can output a plurality of colors. Alternatively, at least a part of the sensors and the memory 35 mounted on the first substrate 30 may be mounted on the second substrate 40, or the light source may be mounted on the first substrate 30. In the present embodiment, the first substrate 30 is larger than and longer in the up-and-down direction than the second substrate 40. Consequently, the first cover 36 which covers the first substrate 30 is longer than the second cover 46 which covers the second substrate 40.

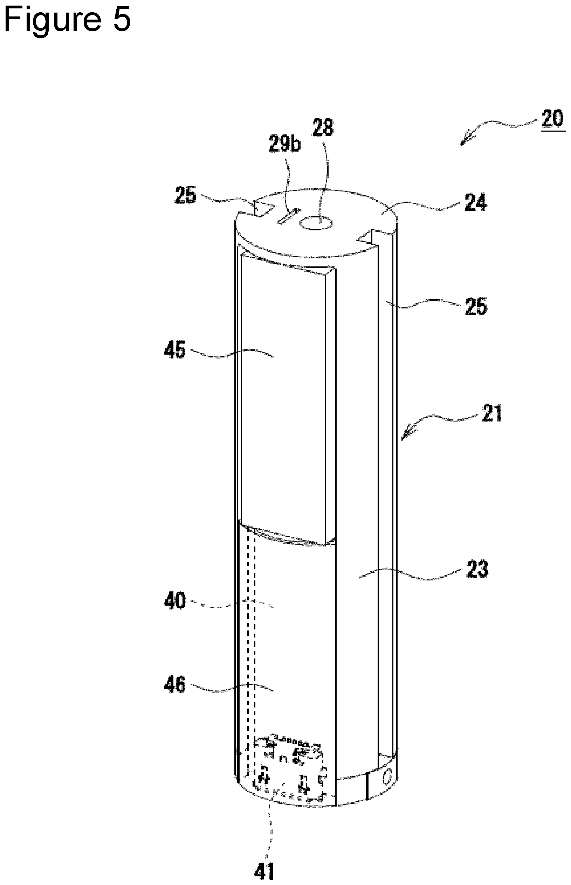

FIG. 5 is a perspective diagram of the first component 20 viewed from the side of the bottom surface section 24. As shown in FIG. 5, the first computer 20 has the battery 45 for supplying electric power to the microcomputer module 31, the sensors, the memory 35, and the like. The battery 45 has an outer appearance of a flat plate shape, and is provided on the second surface of the base 22. On the second surface of the base 22, the second substrate 40 is attached at the upper part, and the battery 45 is attached at the lower part. The battery 45 may be joined to the second surface using an adhesion tape or the like or may be screwed on the second surface. The battery 45, for example, includes a secondary battery, and can be charged by electric power supplied via the cable.

A lead fixation section 29b is formed on the bottom surface section 24 of the first component 20. Similar to the lead fixation section 29a, the lead fixation section 29b is a hole of an elongated slit shape, into which the metal piece imitating the lead is inserted. In the example configuration shown in FIG. 5, the lead fixation section 29b is formed between the guide groove 25 and the through hole 28. The metal piece fixed to the lead fixation section 29b, for example, imitates the negative electrode lead, and is welded to the inner surface of the bottom surface section 11b of the casing 11 using the welding jig inserted into the through hole 28. Alternatively, a hole for allowing passage of a screw for fixing the inserted metal piece to the lead fixation section 29b may be formed on the side surface section 23.

### [Second Component 50]

As shown in FIGs. 1 to 3, the second component 50 has a curved wall section 51 which is curved along the inner circumferential surface of the casing 11, and the protrusion 52 protruding from an inner surface of the curved wall section 51. The curved wall section 51 has a shape with a certain width and elongated in the up-and-down direction. The curved wall section 51 has substantially the same radius of curvature as the inner circumferential surface of the casing 11 and the side surface section 23 of the first component 20. A length in the up-and-down direction of the second component 50 is slightly shorter than a length in the up-and-down direction of the first component 20, and an upper end of the first component 20 is positioned above an upper end of the second component 50. The protrusion 52 is formed at the center portion in the width direction of the curved wall section 51, over the entire length in the up-and-down direction of the curved wall section 51.

The second component 50 is attached to the first component 20 in such a manner that the curved wall section 51 is along an outer surface of the side surface section 23, to thereby cover the outer surface of the side surface section 23. In this configuration, the protrusion 52 of the second component 50 is inserted into the guide groove 25 of the side surface section 23, so that the first component 20 and the second component 50 are engaged with each other. The two second components 50 have the same shape and dimension with each other, and sandwich the first component 20 from both sides in the radial direction. The core component formed from the first component 20 and the second components 50 has a larger diameter by the thickness of the first component 20, at a portion at which the second component 50 is attached.

A groove 53 to which the elastic member 60 is fitted is formed on the second component 50. The groove 53 is formed on an outer surface of the curved wall section 51 along a width direction of the curved wall section 51. While the elastic member 60 is fitted to the second component 50, with the groove 53 to which the elastic member 60 is fitted, a deviation in the up-and-down direction of the elastic member 60 can be suppressed. One groove 53 is formed at each of an upper part and a lower part of the curved wall section 51, and two elastic members 60 are fitted onto the second component 50. The second component 50 has a structure in which, for example, the curved wall section 51 is divided into three parts by the grooves 53 formed over the entire width of the curved wall section 51, and these three parts are connected by the protrusion 52.

### [Elastic Member 60]

As shown in FIGs. 1 to 3 and as described above, the elastic member 60 is attached to the groove 53 of the second component 50, and ties together the core component. An example of the elastic member 60 is a rubber member of a ring shape such as an O ring. An inner size of the elastic member 60 is desirably slight smaller than the diameter of the first component 20, and the elastic member 60 is desirably mounted in a state to pressurize the core component. In the present embodiment, the inner surface of the curved wall section 51 contacts the outer surface of the side surface section 23 in a state in which the protrusion 52 of the second component 50 is inserted into the guide groove 25 of the first component 20. Because of this configuration, the elastic member 60 mounted on the groove 53 of the second component 50 pressurizes the outer surface of the first component 20 via the second component 50.

In the state in which the elastic member 60 is attached to the groove 53 and ties together the core component, the elastic member 60 protrude to an outer side than the outer surface of the curved wall section 51 positioned at the outermost side in the radial direction of the core component. That is, the outer size of the elastic member 60 is larger than the maximum size of the core component in the state in which the elastic member 60 is attached to the groove 53. The elastic member 60 contacts the inner circumferential surface of the casing 11, and suppresses the positional deviation in the up-and-down direction, rotation, or the like of the core component.

The outer size of the elastic member 60 is desirably slightly larger than the inner size of the casing 11 in the state in which the elastic member 60 is attached to the groove 53. When the inner size of the casing 11 is α mm, for example, for the elastic member 60, an O ring having an outer size of (α+0.2) mm is employed. In this case, the elastic member 60 pressurizes the inner circumferential surface of the casing 11, and a strong frictional force is caused between the casing 11 and the elastic member 60. Thus, the positional deviation in the up-and-down direction, the rotation, or the like of the core component can more reliably be suppressed. Further, while the core component to which the elastic member 60 is mounted is pressed into the casing 11, because the elastic member 60 is fitted to the groove 53, the positional deviation and dropping of the elastic member 60 are prevented.

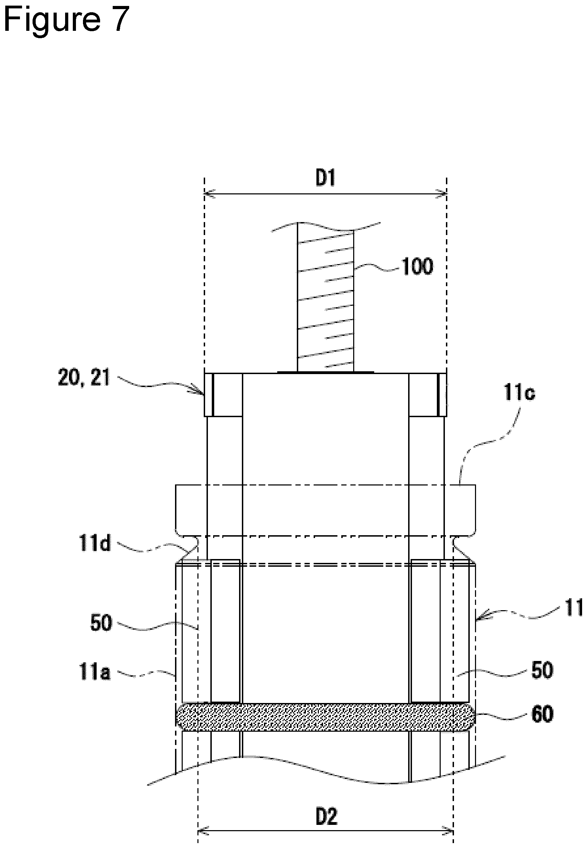

FIGs. 6 and 7 are diagrams showing taking-out of the first component 20 from the casing 11 on which the groove section 11d is formed, using the bolt 100. FIGs. 6 and 7 show the casing 11 with a two-dots-and-a-chain line.

In the present embodiment, as shown in FIGs. 6 and 7, the groove section 11d is formed on the casing 11, and, even after the groove section 11d is formed, the first component 20 can be separated from the second component 50 and taken out from the opening 11c of the casing 11. In the circular tubular battery, in general, the groove section for supporting the sealing assembly is formed at an upper part of the outer housing can.

The groove section 11d is formed annularly along the circumferential direction near the opening 11c of the side surface section 11a. The sensor unit 10 is rotated with a high speed by a groove-forming apparatus, and a machining jig is pushed against the outer circumferential surface of the side surface section 11a. In this manner, the outer circumferential surface of the side surface section 11a is recessed, and the groove section 11d having an expanded inner circumferential surface is formed.

At an inside of the casing 11 on which the groove section 11d is formed, the first component 20 is placed in a manner to not overlap the groove section 11d in an axial direction of the casing 11 (up-and-down direction), and the second component 50 is placed in a manner to overlap the groove section 11d in the up-and-down direction. As shown in FIG. 6, a diameter D1 of the first component 20 is smaller than an inner size D2 of the casing 11 of a portion where the groove 11d is formed, and the first component 20 is centered at the center portion in the radial direction of the casing 11 by the two second components 50 attached at the outer side thereof. Because of this, the first component 20 can be withdrawn upward without interfering with the groove section 11d.

When the first component 20 is taken out from the casing 11, the bolt 100 is inserted into the through hole 28 of the base 22 and fixed, and the bolt 100 is pulled upward. In this process, the entirety of the core component including the second components 50 moves upward, and then, the second components 50 are hooked and stopped by the groove section 11d. When the bolt 100 is further pulled upward in this state, the protrusion 52 of the second component 52 inserted into the guide groove 25 of the first component 20 comes off from the lower end of the guide groove 25 which is open, and only the first component 20 is slid upward and pulled out from the opening 11c.

With the sensor unit 10 having the above-described structure, because the elastic member 60 which ties together the core component contacts the inner circumferential surface of the casing 11 and a frictional force is caused, the rotation and the positional deviation in the up-and-down direction of the core component which may occur during transport or rotation at the battery manufacturing facility can be sufficiently suppressed. In addition, with the sensor unit 10, even after the groove-forming machining in which the inner size of the casing 11 is reduced, the first component 20 equipped with the sensors can be taken out from the casing 11 and easily retrieved. The second component 50 and the elastic member 60 can be taken out by orienting the opening 11c of the casing 11 vertically downward after the first component 20 is taken out.

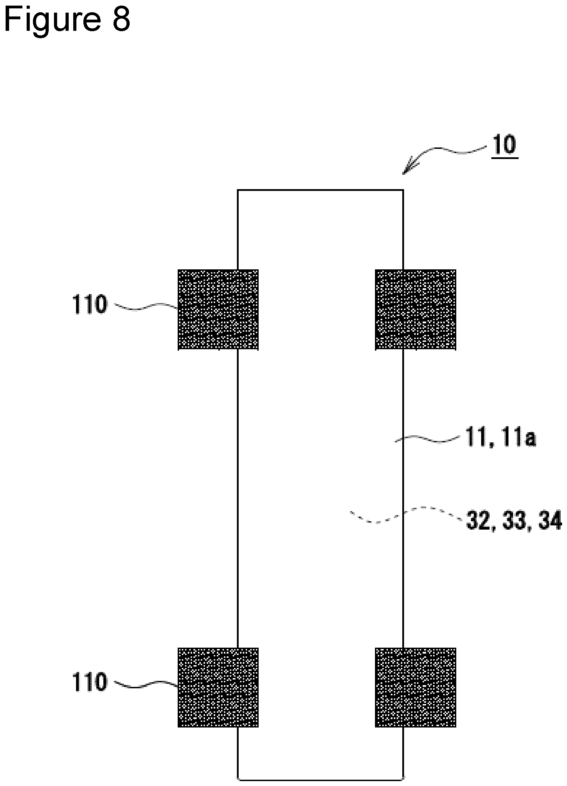

A method of inspecting a battery manufacturing facility using the sensor unit 10 will now be described with reference to FIG. 8.

As shown in FIG. 8, the sensor unit 10 is, for example, rotated at a high speed by a rotation roller 110 which contacts an outer circumferential surface of the casing 11 in a groove-forming apparatus which is a part of the battery manufacturing facility. In this process, when there is aged deterioration, assembly deficiency or the like of the rotation roller 110, rotation insufficiency and core deviation of the rotational axis may occur. When such an abnormality occurs, the quality of the battery or the like may be affected. However, finding of the abnormality in the related art is largely dependent upon the senses and skills of the operator, and a long period of time had been required for inspection. With the inspection method of the present embodiment, with the use of the sensor unit 10, it is possible to visualize the force exerted from the battery manufacturing facility such as the rotation roller 110 to the outer housing can, and to accurately and quickly identify the abnormal location of the facility.

In the inspection method of the present embodiment, the sensor unit 10 is introduced to the battery manufacturing facility, information detected by the sensor of the sensor unit 10 is acquired, and the state of the battery manufacturing facility is analyzed. As described above, on the casing 11 of the sensor unit 10, similar to the battery, the groove section 11d is formed, and the first component 20 on which the sensor is mounted can be taken out from the casing 11 and retrieved after the formation of the groove section 11d. In this case, because it is possible to also visualize the force exerted on the outer housing can during the groove-forming machining, the groove-forming apparatus can be inspected using the sensor unit 10.

In the inspection method of the present embodiment, a reference value based on the detected information of the sensor, acquired in advance by introducing the sensor unit 10 to the facility in the normal state in which there is no abnormality in the facility, and a value based on the detected information of the sensor acquired during the inspection are compared, to judge the presence or absence of the abnormality. When there is an abnormality in the facility, the abnormal location of the facility is identified. The detected information stored in the memory 35 of the sensor unit 10 may be taken out to the external apparatus through the cable connected to the connection terminal 41, or may be transmitted to the external apparatus through the wireless communication function of the microcomputer module 31.

For the judgment of the abnormality, for example, a predetermined threshold defined based on the reference value is used, and it is judged that there is an abnormality when the acquired value exceeds the threshold. The data analysis including the abnormality judgment and identification of the abnormality location is performed by a predetermined computer. The predetermined computer may be any computer which can acquire the detected information from the sensor unit 10 and has the data analysis function.

The sensor unit 10 is introduced to the battery manufacturing facility after metal pieces imitating the leads are fixed on the lead fixation sections 29a and 29b, and the power supply is switched ON, so as to set the sensor unit 10 in a state in which the measurement by the sensor is enabled. In the sensor unit 10, for example, the power supply is automatically switched ON when the sensor unit 10 is connected to the computer for analysis through the connection terminal 41 and the cable. The sensor unit 10 may be supplied to the groove-forming apparatus or the like in a state being held on a predetermined transporting jig or the like.

The sensor unit 10 is introduced, for example, to the facility at the timing of maintenance of the battery manufacturing facility, but may alternatively be introduced to the facility during production of the battery. The sensor unit 10 is desirably introduced to the facility periodically, such as once every day. While the sensor unit 10 is supplied to the groove-forming step, the welding step of the lead, the crimping step, and the like, and is processed similarly to the outer housing can of the battery in these steps, desirably, the sensor unit 10 is not supplied to the injection step of the electrolyte solution, for the purpose of protecting the sensor or the like.

The sensor unit 10 may experience a strong impact during transport, in addition to the machining processes such as groove forming and welding. For example, when the sensor unit 10 is fed by two rotating assemblies, when a deviation is caused in the positional relationship between the rotating assemblies, a strong impact may be exerted on the sensor unit 10 during the transport. Alternatively, when the guide on the transport path is deformed to protrude toward an inner side of the transport path, the sensor unit 10 may collide with an end of the guide, resulting in a strong impact being exerted. When the sensor unit 10 rapidly decelerates due to such impacts, the numerical value of the acceleration detected by the acceleration sensor 32 becomes large, and thus, the abnormality location of the facility can be identified.

With the facility inspection using the sensor unit 10, as described above, the abnormal location of the facility can be accurately and quickly identified. According to this method, for example, wear and damages of facility components, assembly deficiency of components, wear-out of the oil or core deviation of rotation components, and environment in the facility such as temperature, humidity, and atmospheric pressure, can be easily visualized. In addition, when a plurality of manufacturing lines are provided in the manufacturing facility, process evaluation of the manufacturing apparatuses between the lines may be performed using the sensor unit 10.

The above-described embodiment can be suitably modified in design within a scope of not adversely affecting the advantage of the present disclosure. For example, in the above-described embodiment, a configuration is exemplified in which the acceleration sensor 32 and the gyro sensor 33 are mounted on the first substrate 30, alternatively, only one of the acceleration sensor 32 or the gyro sensor 33 may be mounted on the first substrate30. In addition, while the ring-shaped member such as the O ring (elastic member 60) is exemplified as the elastic member, alternatively, the elastic member may be a tubular member which can be fitted to the second component.

### REFERENCE SIGNS LIST

10 sensor unit, 11 casing, 11a side surface section, 11b bottom surface section, 11c opening, 11d groove section, 20 first component, 21 support assembly, 22 base, 23 side surface section, 24 bottom surface section, 25, 26 guide groove, 27, 28 through hole, 29a, 29b lead fixation section, 29c thread hole, 30 first substrate, 31 microcomputer module, 32 acceleration sensor, 33 gyro sensor, 34 environment sensor, 35 memory, 36 first cover, 36a, 46a, 52 protrusion, 36b opening, 37 screw, 40 second substrate, 41 connection terminal, 45 battery, 46 second cover, 50 second component, 51 curved wall section, 53 groove, 60 elastic member, 100 bolt, 110 rotation roller.

## Claims

1. A sensor unit which is introduced to a battery manufacturing facility, the sensor unit comprising:
a casing having a tubular shape with a bottom, and that is processed similarly to an outer housing can of a battery in the battery manufacturing facility; and
a sensor that is mounted on the casing and that detects a force which acts from the battery manufacturing facility to the casing.

2. The sensor unit according to claim 1, wherein
the casing is identical to the outer housing can, and
the sensor is housed inside the casing.

3. The sensor unit according to claim 1 or 2, wherein
the casing has a circular tubular shape with a bottom.

4. The sensor unit according to claim 3, further comprising:
a first component on which the sensor is mounted and that is housed inside the casing; and
a second component placed to engage an outer side of the first component, wherein
the first component is configured such that the first component can be separated from the second component and taken out through an opening of the casing.

5. The sensor unit according to claim 4, wherein
a groove section is formed on the casing in the battery manufacturing facility similar to the outer housing can,
the first component is placed in such a manner to not overlap the groove section in an axial direction of the casing, and
the second component is placed in such a manner to overlap the groove section in the axial direction of the casing.

6. The sensor unit according to claim 4 or 5, further comprising:
an elastic member of an annular shape that is fitted to the second component so as to contact an inner circumferential surface of the casing.

7. The sensor unit according to claim 6, wherein
a groove to which the elastic member is fitted is formed on the second component.

8. The sensor unit according to any one of claims 4 to 7, wherein
the first component comprises a first substrate on which the sensor is provided, and a second substrate on which one of a wireless communication module and a connection terminal is provided, and
the other of the wireless communication module and the connection terminal is provided on the first substrate.

9. The sensor unit according to any one of claims 4 to 8, wherein
a memory and a battery are provided on the first component.

10. The sensor unit according to any one of claims 1 to 9, wherein
the sensor includes at least one of an acceleration sensor or a gyro sensor.

11. The sensor unit according to claim 10, wherein
the sensor further includes an environment sensor which detects at least one of temperature, humidity, or atmospheric pressure in the battery manufacturing facility.

12. A method of inspecting a battery manufacturing facility, comprising:
introducing the sensor unit according to any one of claims 1 to 11 to the battery manufacturing facility; and
acquire information detected by the sensor of the sensor unit, and analyzing a state of the battery manufacturing facility.

13. The method of inspecting the battery manufacturing facility according to claim 12, wherein
a groove section is formed on the casing in the battery manufacturing facility similar to the outer housing can, and
after the groove section is formed, the sensor is taken out from the casing and retrieved.
